# EUROPÄISCHE PATENTANMELDUNG

(11) **EP 1 095 829 A2**
(43) Veröffentlichungstag der Anmeldung: **02.05.2001**
(21) Anmeldenummer: 00122292.6
(22) Anmeldetag: 20.10.2000
(51) Int. Cl.: B60S 1/04

(54) **Abstandhaltevorrichtung für einen Scheibenwischer eines Kraftfahrzeuges**

(30) Priorität: 29.10.1999 DE 19952251
(71) Anmelder: Volkswagen Aktiengesellschaft, 38436 Wolfsburg (DE)
(72) Erfinder: Ostrowski, Wolfgang, 38446 Wolfsburg (DE)

(57) **Zusammenfassung**

Abstandhaltevorrichtung, wobei an der zur Parkstellung gerichteten Seitenfläche des Scheibenwischers eine zur Glasebene gerichtete Gleitschiene (2) mit einer Gleitkante (7) angeordnet ist und der Abstand zwischen der Gleitkante und der Glasebene so bemessen ist, daß die Gleitschiene (2) mittels der Gleitkante (7) in Parkstellung des Scheibenwischers auf einer rampenähnlichen, im Querschnitt keilförmigen festsitzenden Anordnung (8) aufsitzt, wobei der Querschnitt der Anformung (8) sich in Richtung Glasscheibe (6) verjüngt und die Gleitschiene (2) an der ansteigenden Gleitebene (9) der Anformung (8) bis zur Parkstellung einen definierten Weg zurücklegt, der ein Anheben des Wischerblattes (1) sicherstellt.

Des weiteren ist in Parkstellung auf der dem Fahrtwind zugekehrten Seite des angehobenen Scheibenwischers ein feststehendes Luftleitelement zumindestens am unteren Bereich vorgesetzt. In näherer Ausführung der Erfindung ist dieses Luftleitelement eine Formnase (11).

## Beschreibung

Die Erfindung betrifft eine Abstandhaltevorrichtung für einen Scheibenwischer, wobei ein aus Bügelsystem und Wischergummi bestehendes Wischerblatt an einem Wischerarm befestigt ist, der Wischerarm das Wischerblatt nachgiebig gegen die Glasscheibe drückt und der Scheibenwischer in eine Parkstellung verfahrbar ist.

Flüssigkeiten, wie Regenwasser, die auf Glasscheiben von Kraftfahrzeugen gelangen, werden durch motorisch angetriebene Scheibenwischer von der Glasscheibe entfernt. Dabei sind die Scheibenwischer über eine Drehachse parallel zur Glasscheibe hin- und herschwenkbar. Damit die Glasscheibe und der Scheibenwischer gereinigt werden können, läßt sich der Wischerarm quer zur Glasscheibe aus seiner Arbeitsstellung in eine Reinigungsstellung wegkippen. Um die Reinigungswirkung des Scheibenwischers zu gewährleisten, wird meist über ein Federsystem ein Anpreßdruck auf das Wischerblatt ausgeübt, welcher den Wischergummi mit seiner Lippe an die Glasscheibe andrückt. Dieser für die Flüssigkeitsentfernung notwendige Anpreßdruck wirkt nicht nur im Betrieb, sondern kontinuierlich, also auch in der Parkstellung sowie auch, wenn das Kraftfahrzeug nicht benutzt wird. Die kontinuierliche Druckbelastung des Wischergummis ist insbesondere bei Witterungsunbilden nachteilig. Im Winter bei Kälte friert der Wischergummi mit seiner Dichtlippe an der Glasscheibe fest, im Sommer bei hohen Temperaturen klebt der Wischergummi an der Glasscheibe. Besonders im Winter bedarf es Aufwand, um den Scheibenwischer wieder funktionsfähig zu machen. Mittels Auftaumittel und einer vorübergehenden Verschwenkung des Scheibenwischers in die Reinigungsstellung muß die Funktionsfähigkeit wieder hergestellt werden. Werden diese Maßnahmen beim Festfrieren oder Ankleben nur unvollständig durchgeführt, so besteht die Gefahr, daß die Wischergummilippe abreißt bzw. beschädigt wird und damit die Lebensdauer des Wischergummis stark herabgesetzt ist.

Die aufgezeigten Nachteile werden in verschiedenerweise beseitigt. Die herkömmliche Methode, die Glasscheiben mittels Folien oder Planen abzudecken oder das Kippen der Scheibenwischer in die Reinigungsstellung, ist nur ein Notbehelf, da dies nur bei abgestelltem Kraftfahrzeug möglich ist. Um zu einem schonenden Gebrauch der Scheibenwischer zu gelangen, wurden bereits Ausführungen bekannt, die den Wischergummi in Parkstellung abheben und zwar in der Weise, daß der Anpreßdruck des Scheibenwischers verringert oder aufgehoben wird.

Bekannt ist das Anheben und damit die Entlastung des gesamten Wischerarmes. So beschreibt die DE 4202965 C1 eine Wischvorrichtung für Scheiben von Fahrzeugen, wobei über ein Verstellelement einer Hubvorrichtung der Wischerarm in Parkstellung angehoben wird. Eine Hubvorrichtung mit einem Hubarm kann in einer Parkstellung des Wischers mit einer Angriffsfläche von unten anhebend auf den Wischerarm einwirken. Der Hubarm ist über eine Lagerstelle nach dem Hebelprinzip einsetzbar. Ein Verstellelement mittels pneumatischer Unterdruck-Ansteuerung über Kolben und Feder verschiebt den Hubarm dergestalt, daß der Wischerarm in Parkstellung angehoben bzw. bei Wischeinsatz wieder in Richtung Scheibenebene abgesetzt wird. Diese Vorrichtung ist kompliziert aufgebaut und störanfällig.

In der EP 0812744 A1 wird eine Einrichtung zum Beabstanden eines Scheibenwischers von einer Scheibe beschrieben. Am Schwenkarm ist eine Fixiervorrichtung befestigt, an der ein Distanzhalter mit einer Scheibenkontaktfläche bewegbar angeordnet ist.

Zum Abheben des Wischerarmes wird der Distanzhalter gegenüber der Fixiervorrichtung um eine quer zum Schwenkarm gerichtete Drehachse so gedreht, daß die Scheibenkontaktfläche auf der Scheibe aufsitzt und der Abstand der Scheibenkontaktfläche von der Fixiervorrichtung maximal ist. Der Distanzhalter stützt sich in diesem Fall an der Scheibe ab und beabstandet dadurch den Scheibenwischer von der Scheibe. Zum Entriegeln muß der Distanzhalter wieder so gedreht werden, daß der Abstand der Scheibenkontaktfläche von der Fixiervorrichtung minimal ist. Diese Einrichtung zum Beabstanden des Scheibenwischers ist nur beim Abstellen des Fahrzeuges einsetzbar. Der Distanzhalter ist von Hand zu betätigen, was die Gefahr in sich birgt, daß bei Inbetriebnahme des Fahrzeuges keine Entriegelung der Scheibenwischer erfolgt. Die noch angehobenen Wischerarme führen wie bei ähnlichen Ausführungen durch die Entlastung der Wischerarme zu einem sogenannten Flattern des Wischerblattes. Es wird zwar vorgeschlagen, den Distanzhalter über Antriebselemente und Regeleinrichtungen zu steuern, dies ist jedoch technisch aufwendig.

Eine ähnliche Lösung ist in DE 29615696 U1 beschrieben. Ein Befestigungsglied ist an dem Wischerblatt befestigt und über eine Welle ist eine Spannklammer mit Distanzhalter drehbar gelagert. Beim Abstützen des Distanzhalters an der Windschutzscheibe wird der Scheibenwischer gegen die Druckkraft des Wischerarmes in Abstand zur Windschutzscheibe gehalten. Auch bei dieser Konstruktion ist manuelle Betätigung notwendig.

Die DE 3346845 A1 beschreibt ein verschwenkbares Stützglied zum Abstandhalten eines Scheibenwischers von einer Sichtscheibe, wobei in Betriebslage das Stützglied an der Sichtscheibe anliegt und Tragarm und Wischerblattrahmen anhebt. Beim Anlaufen des Scheibenwischers geht das Stützglied mittels Federn aus der Betriebslage in eine Ruhelage über. Die angehobenen Scheibenwischer neigen beim Fahren ebenfalls zum Flattern.

Aus der DE 19547197 Al ist eine Scheibenwischeranlage zum Wischen einer Glasscheibe bekannt, bei der der Scheibenwischer in einer verschließbaren Öffnung der Karosserie geparkt wird. Unterhalb der waagerechten Kante der Glasscheibe in Höhe der Parkstellung des Scheibenwischers besitzt die Karosserie ein vorspringendes Element, so daß eine

U-förmige, der Größe des Scheibenwischers angepaßte Öffnung entsteht. In Parkstellung verschließt eine gelenkig angeordnete Klappe mittels eines durch den Scheibenwischer betätigten Fingers die Öffnung, so daß der Scheibenwischer geschützt ist. Bei Inbetriebnahme des Scheibenwischers wird die Klappe durch die Antriebskraft des Wischers wieder geöffnet. In Parkstellung besitzt diese Konstruktion zwar eine gute Aerodynamik, jedoch muß die Karosserie hierfür aufwendig umgebaut werden. Da der Scheibenwischer unterhalb der Glasscheibe geparkt wird, müssen Vorkehrungen getroffen werden, um den Scheibenwischer bei Inbetriebnahme wieder schonend auf die Glasscheibe zu setzen.

Darüber hinaus sind an Scheibenwischern angebrachte Luftleiteinrichtungen oder Spoiler bekannt, die den Anpreßdruck des Wischergummis erhöhen oder die Aerodynamik verbessern sollen. So beschäftigt sich die DE 3225919 A1 mit einem strömungsgünstig gestalteten Heck eines Personenkraftwagens. Hierbei ist auf einem Wischerarm auf der der Sichtscheibe abgekehrten Seite eine den Luftwiderstandsbeiwert reduzierende Luftleitvorrichtung aufgesetzt. Der Spoiler besitzt eine aerodynamische Abrißkante. Diese spoilerartigen Anordnungen entlasten nicht das Wischerblatt.

Der Erfindung liegt die Aufgabe zugrunde, eine Abstandhaltevorrichtung für einen Scheibenwischer eines Kraftfahrzeuges zu entwickeln, bei der mit einfachen Mitteln gleichzeitig eine Beabstandung des Scheibenwischergummis in Parkstellung, eine gute Aerodynamik und ein größerer Anpreßdruck bei Inbetriebnahme erreicht wird.

Die Aufgabe wird erfindungsgemäß durch eine Abstandhaltevorrichtung mit den kennzeichnenden Merkmalen der Patentansprüche 1 und 2 gelöst. Aus- und Weiterentwicklungen der Erfindung sind in den Unteransprüchen niedergelegt.

Die Erfindung beruht darauf, daß eine am Scheibenwischer angebrachte Gleitschiene mittels einer Gleitkante in Parkstellung auf eine ansteigende Gleitebene einer fixierten rampenähnlichen Anformung gleitet und durch den durch die Schräge bedingten Höhenunterschied eines definierten Weges das Wischerblatt abgehoben wird. Dieses Abheben des Wischerblattes ist störungsfrei und mit geringem Aufwand realisierbar. Die eingesetzte Gleitschiene mit ihrer bogenförmigen in Richtung Parkstellung gerichteten Ausführung verbessert die Aerodynamik in der Funktion eines Luftleitelementes, übt einen Anpreßdruck auf den Wischergummi bei Inbetriebnahme aus und erleichtert das Gleiten auf der rampenähnlichen Anformung. Ein vorgesetztes feststehendes Luftleitelement, im speziellen Fall eine Formnase, verbessert bei dem angehobenen Wischerblatt in Parkstellung die Aerodynamik weiter, da Kanten und Zwischenräume abgedeckt sind. Insbesondere wird das nachteilige Flattern des Wischerblattes bzw. des gesamten Scheibenwischers vermieden. Die Gleitschiene kann an allen Stellen des Scheibenwischers angebracht werden. Vorteilhaft aber ist und in besonderer Weise bevorzugt, daß sie an der Seitenfläche des Wischerblattes anordbar ist. Dadurch besteht die Möglichkeit, nur das Wischerblatt anzuheben, welches durch das Bügelsystem leicht abhebbar ist, ohne den Zustelldruck des Trägerarmes überwinden zu müssen.

Die Erfindung wird im folgenden an Hand eines Ausführungsbeispiels näher erläutert.

Die zugehörige Zeichnung zeigt eine schematische Darstellung der Abstandhaltevorrichtung im Querschnitt.

An der zur Parkstellung gerichteten Seitenfläche des Wischerblattes 1 ist eine bogenförmige spoilerartige Gleitschiene 2 über ein Verbindungselement 3 angesetzt. In dem Wischerblatt 1 ist ein Wischergummi 4 integriert, der über die Gummilippe 5 auf der Glasscheibe 6 aufsitzt. Die Gleitschiene 2 läuft in eine runde Gleitkante 7 aus. Der Abstand der Gleitkante 7 von der Glasebene ist bei Betrieb des Scheibenwischers so groß, daß beim Auslauf des Scheibenwischers in eine Parkstellunq eine rampenähnliche Anformung 8 mit einer ansteigenden Gleitebene 9 passierbar ist. Beim Gleiten der Gleitkante 7 auf der Gleitebene 9 mit einem zurückgelegten Weg 5 wird die Höhe h überwunden, die ausreicht, um den Wischergummi 4 mit der Gummilippe 5 von der Glasscheibe zu heben. Die rampenähnliche Anformung 8 besitzt eine abgerundete Auflaufkante 10, die in die Gleitebene 9 übergeht. Da auch die Gleitkante 7 rund ist, wird das Aufsetzen der Gleitschiene 2 auf die Gleitebene 9 erleichtert. In der Parkstellung ist der untere Teil der Gleitschiene 2 und die Gleitkante 7 durch eine an der rampenähnlichen Anformung 8 angebrachte Formnase 11 abgedeckt. Dadurch wird beim Fahren die Aerodynamik verbessert, aber auch ein Flattern oder Klappern des Scheibenwischers in Parkstellung verhindert. Die rampenähnliche Anformung 8 verläuft parallel zur Gleitschiene 2 und ist mit der Wasserkastenabdeckung 12 integriert. Die Gleitschiene 2 besteht aus einem Kunststoff.

Bei Inbetriebnahme des Scheibenwischers gleitet in einfacher Weise die Gleitschiene 2 über die Gleitkante 7 und Gleitebene 9 von der Anformung 8 herunter, so daß der Wischergummi 4 mit der Gummilippe 5 wieder auf die Glasscheibe 6 aufsetzt.

### BEZUGSZEICHENLISTE

- 1: Wischerblatt
- 2: Gleitschiene
- 3: Verbindungselement
- 4: Wischergummi
- 5: Gummilippe
- 6: Glasscheibe
- 7: Gleitkante
- 8: rampenähnliche Anformung
- 9: Gleitebene
- 10: Auflaufkante
- 11: Formnase
- 12: Wasserkastenabdeckung

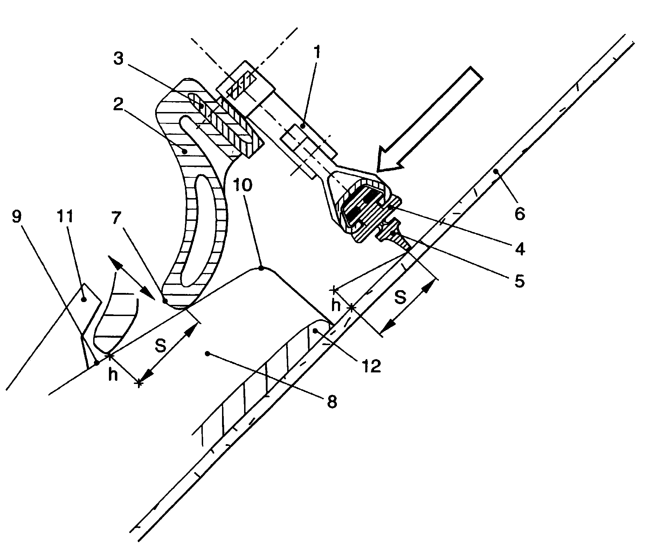

## Patentansprüche

1. Abstandhaltevorrichtung für einen Scheibenwischer eines Kraftfahrzeuges, bestehend aus Wischerarm und Wischerblatt, wobei der Wischergummi in Parkstellung angehoben ist, **dadurch gekennzeichnet**, daß an der zur Parkstellung gerichteten Seitenfläche des Scheibenwischers und parallel zum Wischerblatt (1) eine zur Glasebene gerichtete Gleitschiene (2) mit einer auslaufenden Gleitkante (7) angeordnet ist und der Abstand zwischen Gleitkante und Glasebene so bemessen ist, daß die Gleitschiene (2) mittels der Gleitkante (7) in Parkstellung des Scheibenwischers auf einer rampenähnlichen, im Querschnitt keilförmigen, fixierten und parallel zur Gleitschiene (2) ausgerichteten Anformung (8) aufsitzt, wobei der Querschnitt der Anformung sich in Richtung Glasscheibe (6) verjüngt und die Gleitschiene (2) mittels Gleitkante (7) an der ansteigenden Gleitkante (9) der Anformung (8) bis zur Parkstellung einen definierten Weg zurücklegt, der ein Anheben des Wischerblattes (1) sicherstellt.

2. Abstandhaltevorrichtung für einen Scheibenwischer eines Kraftfahrzeuges, **dadurch gekennzeichnet**, daß in Parkstellung auf der dem Fahrtwind zugekehrten Seite des angehobenen Scheibenwischers ein feststehendes Luftleitelement zumindestens dem unteren Bereich des Scheibenwischers vorgesetzt ist.

3. Abstandhaltevorrichtung nach Anspruch 2, **dadurch gekennzeichnet**, daß in Parkstellung der untere Teil der Gleitschiene (2) mit Gleitkante (7) durch eine an der rampenähnlichen Anformung (8) angebrachten Formnase (11) abgedeckt ist.

4. Abstandhaltevorrichtung nach Anspruch 1, **dadurch gekennzeichnet**, daß die Gleitschiene (2) an der Seitenfläche des Wischerblattes (1) angeordnet ist.

5. Abstandhaltevorrichtung nach Anspruch 1 , **dadurch gekennzeichnet**, daß die Gleitschiene (2) an der Seitenfläche des Trägerarmes angeordnet ist.

6. Abstandhaltevorrichtung nach den Ansprüchen 1, 4, 5, **dadurch gekennzeichnet,** daß die Gleitschiene (2) eine zur Parkstellung gerichtete konkave Form besitzt.

7. Abstandhaltevorrichtung nach den Ansprüchen 1, 4 - 6, **dadurch gekennzeichnet**, daß die Gleitkante (7) abgerundet ist.

8. Abstandhaltevorrichtung nach den Ansprüchen 1, 4 - 7, **dadurch gekennzeichnet**, daß die rampenähnliche Anformung (8) eine abgerundete Auflaufkante (10) besitzt.

9. Abstandhaltevorrichtung nach den Ansprüchen 1, 4 - 8, **dadurch gekennzeichnet**, daß die rampenähnliche Anformung (8) mit der Wasserkastenabdeckung (12) integriert ist.

10. Abstandhaltevorrichtung nach den Ansprüchen 1, 4 - 8, **dadurch gekennzeichnet**, daß die rampenähnliche Anformung (8) an der Karosserie angebracht ist.

11. Abstandhaltevorrichtung nach den Ansprüchen 1, 4- 8, **dadurch gekennzeichnet**, daß die rampenähnliche Anformung (8) an der Glasscheibe (6) oder dem Glasscheibenquerträger angebracht ist.
